# EUROPEAN PATENT APPLICATION

(11) **EP 4 382 285 A1**
(43) Date of publication of application: **12.06.2024**
(21) Application number: 22211439.9
(22) Date of filing: 05.12.2022
(51) Int. Cl.: B29C 70/86, B29D 99/00, B29C 33/68

(54) **A METHOD OF MANUFACTURING A WIND TURBINE ROTOR BLADE PART HAVING AN EMBEDDED PLACEHOLDER**

(71) Applicant: Nordex Blade Technology Centre APS, 5771 Stenstrup (DK)
(72) Inventor: Sørensen, Flemming, 5700 Svendborg (DK)
(74) Representative: Hauck Patentanwaltspartnerschaft mbB

(57) **Abstract**

A method of manufacturing a wind turbine rotor blade part (36), the method comprising the following steps:

-providing a placeholder (76) comprising a core member (10) and a sleeve (12), wherein the core member (10) comprises a longitudinal direction (14), a circumferential surface (16), a front end (18) and a back end (20), and the sleeve (12) comprises a peel ply layer (22), wherein the sleeve (12) covers the circumferential surface (16) and the back end (20) of the core member (10) and is affixed to the back end (20) of the core member (10);

-arranging the placeholder (76) together with reinforcing fibres and a matrix material in a mould (84);

-curing of the matrix material, so that the placeholder (76) is embedded in a fibre-reinforced composite material (34).

## Description

The invention relates to a method of manufacturing a wind turbine rotor blade part comprising a placeholder. The placeholder is embedded in a fibre-reinforced composite material of the wind turbine rotor blade part with the intention to later remove the placeholder, such that a cavity is formed in the fibre-reinforced composite material. This cavity can be used in particular for inserting and fastening a joining element to the wind turbine rotor blade part. mm

From the document WO 2022/096497 A1, such a method has become known. In order to ensure that the placeholder can be removed from the fibre-reinforced composite material, the known method suggest using a placeholder with a non-binding surface comprising a PTFE material, or with an outer layer comprising a release agent, a sacrificial material or a peel ply.

Departing therefrom, it is an object of the invention to provide an improved method and an improved placeholder that make forming of a cavity having the desired surface characteristics even more easy.

This object is solved by the method of claim 1 and by the placeholder of claim 12. Preferred aspects are given in the dependent claims.

The method of manufacturing a wind turbine rotor blade part comprises the following steps:
- providing a placeholder comprising a core member and a sleeve, wherein the core member comprises a longitudinal direction, a circumferential surface, a front end and a back end, and the sleeve comprises a peel ply layer, wherein the sleeve covers the circumferential surface and the back end of the core member and is affixed to the back end of the core member;
- arranging the placeholder together with reinforcing fibres and a matrix material in a mould;
- curing of the matrix material, so that the placeholder is embedded in a fibre-reinforced composite material.

The wind turbine rotor blade part may be any part of a wind turbine rotor blade, in particular a shell part such as a half shell, a spar, a spar cap or a longitudinal segment of any of these wind turbine rotor blade parts. The wind turbine rotor blade part may also be a connection part that is intended for use as a root connection of wind turbine rotor blade to a hub of a wind turbine rotor or as a connection of a wind turbine rotor blade segment to another rotor blade segment. The fastening of the wind turbine rotor blade to the hub or of the wind turbine rotor blade segments to each other can be realized by means of joining elements, in particular sleeves, for example sleeves having a threaded bore, and/or bolts. These joining elements are anchored in the wind turbine rotor blade part when the placeholder embedded in the fibre-reinforced composite material of the wind turbine rotor blade part is removed and replaced with the joining element. The longitudinal direction of the placeholder of the wind turbine rotor blade part can correspond to a longitudinal direction of the wind turbine blade part, and, ultimately, to a longitudinal direction of the wind turbine blade for which the wind turbine rotor blade part is used.

The wind turbine rotor blade part may comprise a joining surface that will get in contact/cooperate with an adjacent component such as a wind turbine rotor blade hub or another wind turbine rotor blade part or segment. The placeholder can be embedded in the fibre-reinforced composite material such that is accessible from the outside, in particular such that the placeholder and/or more specifically the front end of the placeholder is arranged at the joining surface. The joining surface can be arranged substantially perpendicular to the longitudinal direction of the placeholder and/or of the wind turbine rotor blade part. The placeholder may have any suitable shape, for example cylindrical or conical, so that it corresponds to the shape of a joining element with which the placeholder shall later be replaced.

Manufacturing of the wind turbine rotor blade part is at least in part carried out in a mould. The shape and size of the mould depend on the type of the wind turbine rotor blade part. The mould may have a forming surface at which a joining surface of the wind turbine rotor blade part is formed. It may have another forming surface which corresponds to an aerodynamic surface of the wind turbine rotor blade part. An open mould or a closed mould may be used.

The reinforcing fibres can be arranged in the mould in layers. The reinforcing fibres may comprise any suitable fibre type, for example glass fibres or carbon fibres, or a mixture of these, also in combination with any other fibre types. The reinforcing fibres can be dry and/or pre-impregnated with the matrix material. If dry reinforcing fibres are placed in the mould, the matrix material can be added using any suitable process, for example by hand as in traditional hand-layup techniques, by vacuum infusion or by resin injection. The matrix material may be a polyester or epoxy resin, for example.

The placeholder may be positioned in the mould so that its front end is arranged at a joining surface. To this end, the mould may have a positioning means for positioning the placeholder. The positioning means may in particular be arranged at a forming surface of the mould corresponding to the joining surface. For example, the placeholder may have a threaded bore and the mould may have a flange with a through hole, so that the placeholder can be held in place with a bolt guided through the through hole and screwed into the threaded bore of the placeholder. In the alternative or in addition, the placeholder may be held in place by means of other elements placed within the mould, in particular by the reinforcing fibres and/or by foam cores placed within the mould. The core member of the placeholder may be made of metal, in particular steel or aluminium. However, other materials of sufficient stiffness and strength may also be used.

After the matrix material has cured, the reinforcing fibres and the cured matrix material (and optionally any other material positioned within the mould) form a fibre-reinforced composite material in which the placeholder is embedded. This means at least a substantial part of the placeholder's surface, in particular corresponding to its entire circumferential surface or a major part thereof, will be covered by the fibre-reinforced composite material.

It is an advantage of the invention that it is particularly easy to integrate a joining element into the wind turbine rotor blade part by removing the placeholder and replacing it with the joining element. To this end, the placeholder can be removed from the fibre-reinforced composite material simply by pulling out the placeholder in a direction away from its back end. The sleeve with the peel ply layer prevents the matrix material from forming a strong bond with the placeholder's core member, which is a prerequisite for the ability to remove the core member in an easy manner. At the same time, the specific arrangement of the sleeve and its fixation to the back end of the core member has the effect that when pulling the core member out of the fibre-reinforced composite material, the sleeve will be peeled off the wall of the fibre-reinforced composite material surrounding the placeholder, so that the sleeve will be removed in its entirety from the fibre-reinforced composite material together with the core member. Ideally, the cavity thus formed in the fibre-reinforced composite material will have a clean surface free of any remainders of the sleeve. This clean surface will be well-suited for obtaining a strong bond between the wall of the cavity and a joining element adhered thereto.

The wind turbine rotor blade part may be provided with any number of placeholders, for example with only one, two, three or more than three placeholders. Each of the placeholders is embedded in the fibre-reinforced composite material and is removable from the fibre-reinforced composite material as described above.

In an aspect, the step of providing a placeholder comprises applying a release agent to at least the circumferential surface of the core member. A release agent may also be applied to the core member's surface at the back end. The release agent reduces the force required to pull out the core member of the fibre-reinforced composite material as it allows the core member to slide along the sleeve's inner surface. This also helps to achieve a smooth peeling-off process of the sleeve from the fibre-reinforced composite material.

In an aspect, the step of providing a placeholder comprises a step of wrapping the peel ply layer about the circumferential surface of the core member. This is an easy way to form a closely fitting sleeve covering the entire circumferential surface. If desired, the peel ply layer may be fixed by means of an adhesive (e.g. an adhesive tape or an adhesive spray) applied in particular to an outer surface of a section of the peel ply layer, which outer surface contacts an adjacent inner surface of another section of the peel ply layer.

In an aspect, the step of providing a placeholder further comprises a step of folding a section of the peel ply layer that extends along the longitudinal direction beyond the back end of the core member against the back end. This section of the peel ply layer (or any number of corresponding sections) may be fixed by means of an adhesive as well.

In an aspect, the step of providing a placeholder comprises a step of providing the sleeve by forming the peel ply layer such it has a sock-like shape and a subsequent step of inserting the core member into the sleeve. Sock-like means the sleeve is formed substantially like a tube with a closed end, so that the sleeve will automatically cover the circumferential surface and the back end of the core member once the core member is inserted in the sleeve. In order to bring the peel ply layer in the sock-like shape, any suitable technique may be used, including adhering or sewing peel ply layer sections to one another.

In an aspect, the sleeve is affixed to the back end of the core member by means of a clamping element exerting a clamping force on the peel ply layer of the sleeve. This was found to be a very simple and reliable solution for affixing the sleeve, in particular because the clamping element is easy to apply to any peel ply layer, and the clamping force will be almost independent of the exact properties of the peel ply layer in terms of materials and thickness, for example. The clamping element can be arranged such that the clamping force presses the peel play layer against the back end of the core member.

In an aspect, the clamping element is a head of a screw or a washer placed beneath the head of a screw, which screw is screwed into a threaded bore provided at the back end of the core member. In accordance with this aspect, the peel ply layer can be placed between the back end of the core member and the head of the screw or the washer, respectively. By means of the screw, a large clamping force can be applied, leading to a safe attachment of the sleeve to the core member. Moreover, the screw and/or the washer can be used many times, in particular if a release agent is applied to the screw and/or the washer before these elements are getting in contact with the matrix material.

In an aspect, the clamping element has a circumferential lip contacting the peel ply layer. The lip can be arranged at a bottom side of the clamping element, e.g. in a circumferential groove. The lip provides a well-defined contact area for holding the peel ply layer. The lip can also prevent matrix material from getting into the bore hole of the screw connection and blocking the screw connection.

In an aspect, the method comprises the additional step of
- connecting a pulling tool to a fastening element of the core member.

The fastening element in particular is an opening at the front end of the core member, e.g. a threaded bore which is used to assemble the core member to a flange of the mold. Alternatively, the fastening elements can extend beyond the front end of the core member such as a hook, a lug or a pin.

By means of the pulling tool, it is particularly easy to apply the required pulling force to the core member to pull the same together with the sleeve out of the surrounding fibre-reinforced composite material.

In an aspect, the method comprises the additional step of
- pulling the core member out of the fibre-reinforced composite material along the longitudinal direction towards the front end, such that the sleeve is peeled off the fibre-reinforced composite material and a cavity is formed in the fibre-reinforced composite material.

As has been explained above, this additional step will lead to a cavity in the fibre-reinforced composite material well-suited for fastening a joining element thereto.

In an aspect, the method comprises the additional step of
- inserting and fastening a joining element in the cavity, wherein the joining element in particular is a bushing with a threaded bore.

The joining element may in particular be fastened in the cavity by means of an adhesive.

The above problem is also solved by the placeholder of claim 12. The placeholder is for being embedded in a fibre-reinforced composite material of a wind turbine rotor blade part and comprises:
- a core member comprising a longitudinal direction, a circumferential surface, a front end and a back end, and
- a sleeve comprising a peel ply layer, wherein the sleeve covers the circumferential surface and the back end of the core member and is affixed to the back end of the core member.

The placeholder is meant to be used in a method with the features of any of the claims 1 to 11. With regard to the features and advantages of the placeholder, reference is made to the above explanations relating to the method, which apply to the placeholder as well.

The placeholder can be adapted in accordance with the various aspects of the method explained above. For example, the placeholder may comprise a release agent applied to at least the circumferential surface of the core member. The peel ply layer may be wrapped about the circumferential surface of the core member. A section of the peel ply layer that extends along the longitudinal direction beyond the back end of the core member may be folded against the back end. The peel ply layer may have a sock-like shape. The sleeve may be affixed to the back end of the core member by means of a clamping element exerting a clamping force on the peel ply layer of the sleeve. The clamping element may be a head of a screw or a washer placed beneath the head of a screw, which screw is screwed into a threaded bore provided at the back end of the core member. The clamping element may have a circumferential lip contacting the peel ply layer. The core member may comprise a fastening element for connecting a pulling tool to the core member, wherein the fastening element in particular may be an opening at the front end of the core member or a connecting means extending beyond the front end of the core member such as a hook, a lug or a pin.

In an aspect, a wind turbine rotor blade part comprises a fibre-reinforced composite material and a placeholder with the features of claim 12, wherein the placeholder is embedded in the fibre-reinforced composite material.

In an aspect, the placeholder is embedded in the fibre-reinforced composite material such that when pulling the core member out of the fibre-reinforced composite material along the longitudinal direction towards the front end, the sleeve is peeled off the fibre-reinforced composite material and a cavity is formed in the fibre-reinforced composite material.

In the following, the invention is explained in greater detail based on embodiments shown in drawings.
- Fig. 1: shows a wind turbine rotor blade part with an embedded placeholder in a schematic, longitudinal section;
- Fig. 2: shows the arrangement of Fig. 1 while pulling out the placeholder;
- Fig. 3: shows a placeholder in two schematic views;
- Fig. 4: shows another placeholder in two schematic views;
- Fig. 5: shows a core member of still another placeholder in a longitudinal section;
- Fig. 6: shows a wind turbine rotor blade in a schematic, perspective view;
- Fig. 7: shows a wind turbine rotor blade with two longitudinal segments each having a wind turbine rotor blade connection part;
- Fig. 8: shows a wind turbine rotor blade part arranged at a wind turbine rotor blade root.

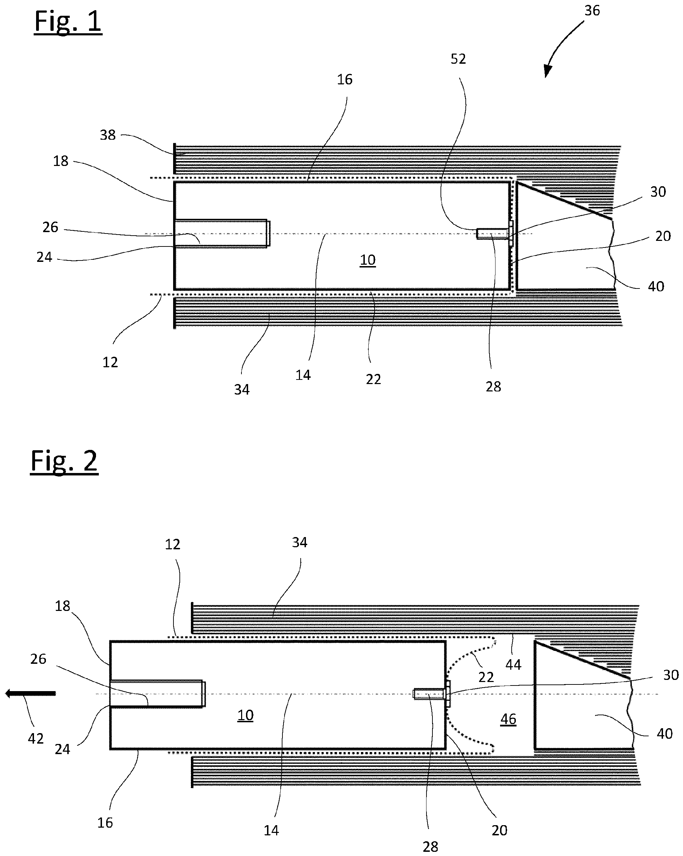

Fig. 1 shows in cross section a placeholder comprising a core member 10 and a sleeve 12. The core member 10 has a longitudinal direction 14, a circumferential surface 16, a front end 18 and a back end 20. The sleeve 12 consists of a peel ply layer 22 having a sock-like shape. The sleeve covers the entire circumferential surface 16 as well as the back end 20 of the core member 10.

The core member 10 further comprises a fastening element, namely an opening 24 having an inner thread 26. The opening 24 is arranged at the front end 18 of the core member 10. At its back end 20, the core member has a threaded bore 52 into which a screw 28 is inserted. The screw 28 has a screw head 30 and serves as a clamping element which is exerting a clamping force on the peel ply layer 22 of the sleeve 12. A section of the peel ply layer 22 covering the back end 18 is arranged between a bottom side of the screw head 30 and the back end 20 of the core member 10.

The placeholder is embedded in a fibre-reinforced composite material 34 of a wind turbine rotor blade part 36. The wind turbine rotor blade part 36 has a joining surface 38 which is flush with the front end 18 of the core member 10. The sleeve 12 extends beyond the front end 18 of the core member 10, so that there is no direct contact between the core member 10 and the surrounding fibre-reinforced composite material 34. The fibre-reinforced composite material 34 is arranged below, above and to the right of the placeholder. Only the front end 18 of the core member is accessible from the outside. Next to the back end 20 of the core member 10 and embedded the in fibre-reinforced composite material 34, the wind turbine rotor blade part 36 comprises a wedge-shaped foam core 40.

In order to manufacture the wind turbine rotor blade part 36 of Fig. 1, the placeholder is provided and arranged in a mould (not shown) together with reinforcing fibres and a matrix material. The matrix material is then allowed to cure, so that the placeholder is embedded in the fibre-reinforced composite material 34.

Fig. 2 shows the arrangement of Fig. 1 while pulling out the core member 10 of the surrounding fibre-reinforced composite material 34 in the direction of the arrow 42, towards the front end 18. This may be done by fastening a pulling tool to the opening 24. One can see that the peel ply layer 22 remains affixed to the back end 20. The core member 10 slides out of the sleeve 12, and the sleeve 12 is peeled off the wall 44 of the cavity 46 formed in the fibre-reinforced composite material 34.

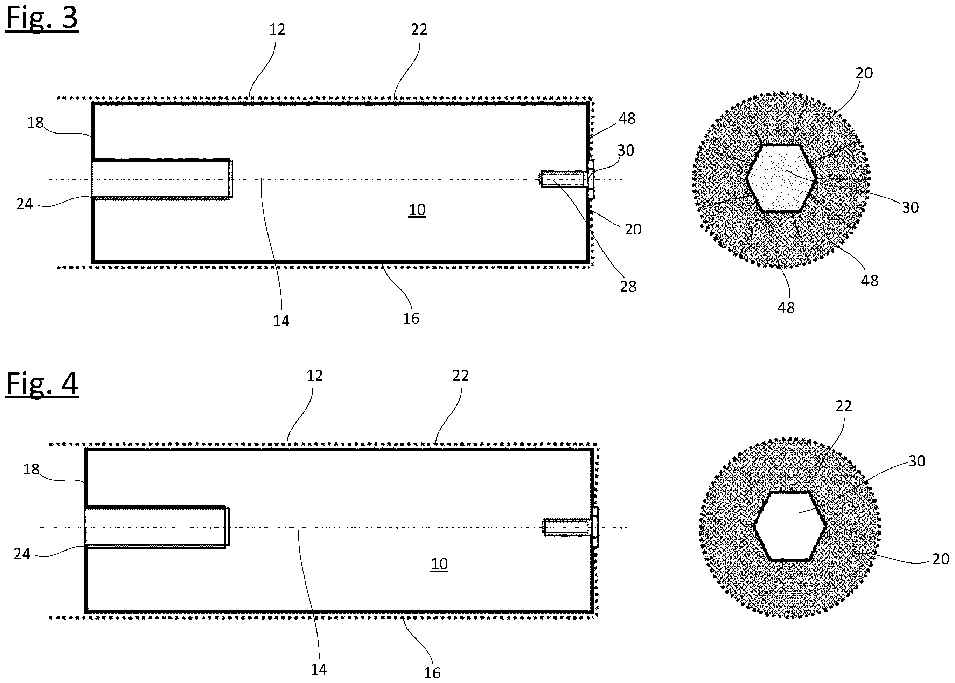

Fig. 3 shows another placeholder, seen to the left of the figure in a longitudinal section and to the right of the figure in a view on the back end 20. The placeholder is similar to the one shown in Figs. 1 and 2. The sleeve 12 has been formed by wrapping the peel ply layer 22 around the circumferential surface 16 of the core member 10. Sections 48 of the peel ply layer 22 extending beyond the back end 18 of the core member 10 have been folded against the back end 18. They are affixed to the back end by means of the screw head 30 of the screw 28.

Fig. 4 shows still another placeholder, seen to the left of the figure in a longitudinal section and to the right of the figure in a view on the back end 20. The placeholder is similar to the one shown in Figs. 1 and 2. It differs from the placeholder of Fig. 3 only in how the sleeve 12 has been formed. Here, the peel ply layer 22 was provided with a sock-like shape in advance, and the core member 10 was then inserted into the sleeve 12.

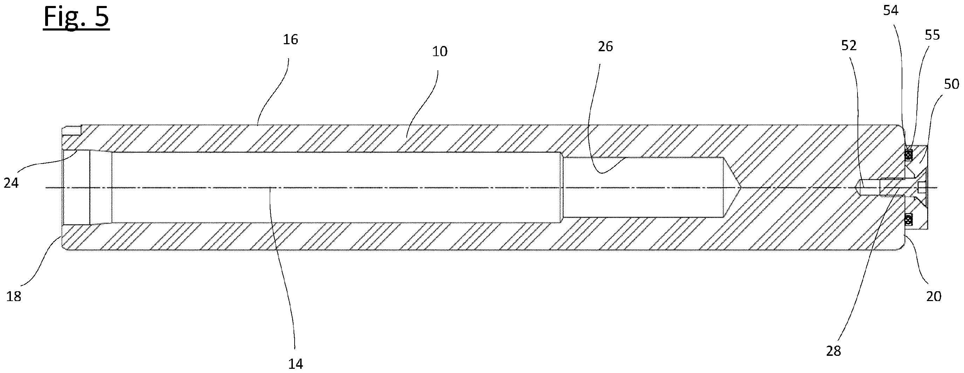

Fig. 5 shows a core member 10 of still another placeholder, in a longitudinal section only. The core member 10 has a longitudinal direction 14, a circumferential surface 16, a front end 18 and a back end 20. The core member 10 further comprises an opening 24 having an inner thread 26 and serving as a fastening element for attaching the core member to a mold flange and/or for assembling a pulling tool (not shown). The opening 24 is arranged at the front end 18 of the core member 10. At its back end 20, the core member 10 has a threaded bore 52 into which a screw 28 is inserted. The screw 28 has a screw head 30. A large-diameter washer 50 is placed beneath the screw head 30 and can be pressed against the back end 18 for clamping a section of a sleeve 12 (not shown) to the back end 18.

At a bottom side of the washer 50, a circumferential groove 54 is formed which can accept an O-ring 55 serving as a lip for clamping the sleeve 12 and for forming a seal between the back end 18 and the washer 50.

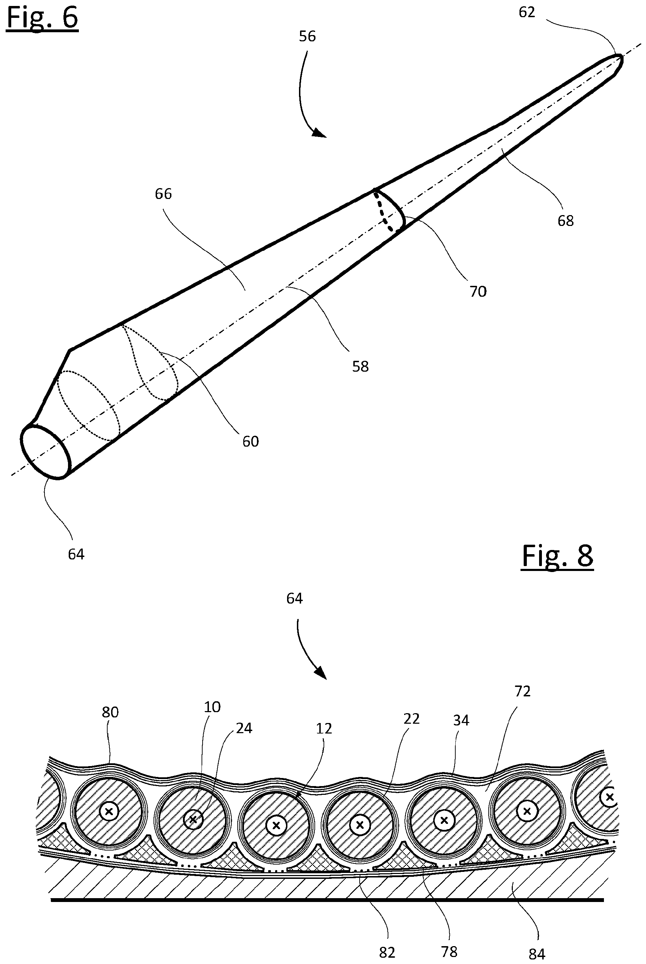

Fig. 6 shows a wind turbine rotor blade 56 having a longitudinal axis 58, an aerodynamic profile 60, a blade tip 62 and a blade root 64. The wind turbine rotor blade 56 is divided in two segments, namely an inner segment 66 comprising the blade root 64 and an outer segment 68 comprising the blade tip 62. The two segments 66 and 68 are joined to each other at a segmentation plane 70.

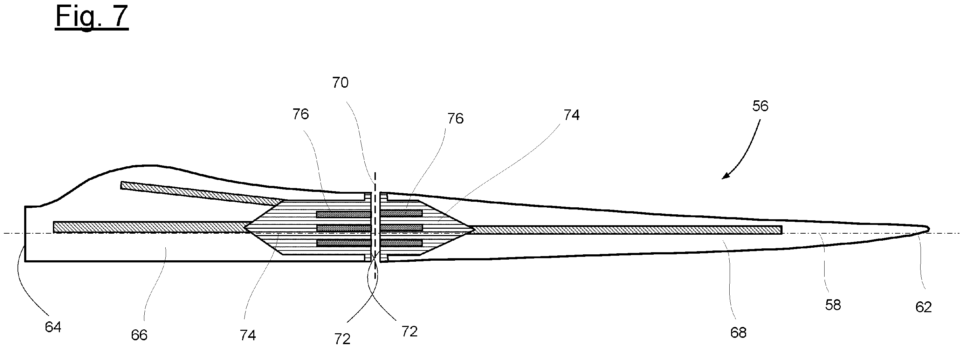

Fig. 7 shows the wind turbine rotor blade of Fig. 6 in another schematic view. The two segments 66, 68 are drawn in a distance from each other. Each one has a joining surface 72. Each of the segments 66, 68 comprises a wind turbine rotor blade connection part 74 facing the segmentation plane 70 and forming the respective joining surface 72. In each of the wind turbine rotor blade connection parts 74, three placeholders 76 are embedded.

Fig. 8 illustrates a way to employ the method at a wind turbine rotor blade root 64. The view is directed on a joining surface 72 of the wind turbine blade root 64, which is adapted to be connected to a wind turbine rotor hub. The wind turbine blade root 64 is shown in a mould 84 and comprises a fibre-reinforce composite material 34 having a plurality of inner layers 80 and a plurality of outer layers 82 of a fibre material. On top of the outer layers 82, foam cores 78 are placed, and between each pair of foam cores, a placeholder including a core member 10 and a sleeve 12 is arranged. Each core member 10 includes an opening 24 for fastening a pulling tool.

### List of reference numerals

- 10: core member
- 12: sleeve
- 14: longitudinal direction
- 16: circumferential surface
- 18: front end
- 20: back end
- 22: peel ply layer
- 24: opening
- 26: inner thread
- 28: screw
- 30: screw head
- 34: fibre-reinforce composite material
- 36: wind turbine rotor blade part
- 38: joining surface
- 40: foam core
- 42: arrow (pulling direction)
- 44: wall
- 46: cavity
- 48: section of the peel ply layer
- 50: washer
- 52: threaded bore
- 54: circumferential groove
- 55: O-ring
- 56: wind turbine rotor blade
- 58: longitudinal axis
- 60: aerodynamic profile
- 62: blade tip
- 64: blade root
- 66: inner segment
- 68: outer segment
- 70: segmentation plane
- 72: joining surface
- 74: wind turbine rotor blade connection part
- 76: placeholder
- 78: foam cores
- 80: inner layer
- 82: outer layer
- 84: mould

## Claims

1. A method of manufacturing a wind turbine rotor blade part (36), the method comprising the following steps:
• providing a placeholder (76) comprising a core member (10) and a sleeve (12), wherein the core member (10) comprises a longitudinal direction (14), a circumferential surface (16), a front end (18) and a back end (20), and the sleeve (12) comprises a peel ply layer (22), wherein the sleeve (12) covers the circumferential surface (16) and the back end (20) of the core member (10) and is affixed to the back end (20) of the core member (10);
• arranging the placeholder (76) together with reinforcing fibres and a matrix material in a mould (84);
• curing of the matrix material, so that the placeholder (76) is embedded in a fibre-reinforced composite material (34).

2. The method of claim 1, wherein the step of providing a placeholder (76) comprises applying a release agent to at least the circumferential surface (16) of the core member (10).

3. The method of claim 1 or 2, wherein the step of providing a placeholder (76) comprises a step of wrapping the peel ply layer (22) about the circumferential surface (16) of the core member (10).

4. The method of claim 3, wherein the step of providing a placeholder (76) further comprises a step of folding a section (48) of the peel ply layer (22) that extends along the longitudinal direction (14) beyond the back end (20) of the core member (20) against the back end (20).

5. The method of claim 1 or 2, wherein the step of providing a placeholder (76) comprises a step of providing the sleeve (12) by forming the peel ply layer (22) such it has a sock-like shape and a subsequent step of inserting the core member (10) into the sleeve (12).

6. The method of any of the claims 1 to 5, wherein the sleeve (12) is affixed to the back end (20) of the core member (10) by means of a clamping element exerting a clamping force on the peel ply layer (22) of the sleeve (12).

7. The method of claim 6, wherein the clamping element is a head (30) of a screw (28) or a washer (50) placed beneath the head (30) of a screw (28), which screw (28) is screwed into a threaded bore (52) provided at the back end (20) of the core member (10).

8. The method of claim 6 or 7, wherein the clamping element has a circumferential lip contacting the peel ply layer (22).

9. The method of any of the claims 1 to 8, wherein the method comprises the additional step of
• connecting a pulling tool to a fastening element of the core member (10).

10. The method of any of the claims 1 to 9, wherein the method comprises the additional step of
• pulling the core member (10) out of the fibre-reinforced composite material (34) along the longitudinal direction (14) towards the front end (18), such that the sleeve (12) is peeled off the fibre-reinforced composite material (34) and a cavity (46) is formed in the fibre-reinforced composite material (34).

11. The method of claim 10, wherein the method comprises the additional step of
• inserting and fastening a joining element in the cavity, wherein the joining element in particular is a bushing with a threaded bore.

12. A placeholder (76) for being embedded in a fibre-reinforced composite material (34) of a wind turbine rotor blade part (36), the placeholder (76) comprising
• a core member (10) comprising a longitudinal direction (14), a circumferential surface (16), a front end (18) and a back end (20), and
• a sleeve (12) comprising a peel ply layer (22), wherein the sleeve (12) covers the circumferential surface (16) and the back end (20) of the core member (10) and is affixed to the back end (20) of the core member (10).

13. A wind turbine rotor blade part (36) comprising a fibre-reinforced composite material (34) and a placeholder (76) with the features of claim 12, wherein the placeholder (76) is embedded in the fibre-reinforced composite material (34).

14. The wind turbine rotor blade part (36) of claim 13, wherein the placeholder (76) is embedded in the fibre-reinforced composite material (34) such that when pulling the core member (10) out of the fibre-reinforced composite material (34) along the longitudinal direction (14) towards the front end (18), the sleeve (12) is peeled off the fibre-reinforced composite material (34) and a cavity (46) is formed in the fibre-reinforced composite material (34).
